# EUROPEAN PATENT SPECIFICATION

(11) **EP 1 030 541 B1**
(45) Date of publication and mention of the grant of the patent: **25.09.2002**
(21) Application number: 99830014.9
(22) Date of filing: 19.01.1999
(51) Int. Cl.: H05B 41/28, H02M 7/5383

(54) **Power supply device for a resonant load**
Betriebsschaltung für eine schwingende Last
Circuit pour alimenter une charge résonnante

(43) Date of publication of application: 23.08.2000
(73) Proprietor: MAGNETEK S.p.A., 52028 Terranuova Bracciolini (AR) (IT)
(72) Inventor: Canova, Antonio, 52025 Montevarchi, Arezzo (IT); Martini, David, 52027 San Giovanni Valdarno, Arezzo (IT)
(74) Representative: Mannucci, Michele

(56) References cited:
- EP-A- 0 758 160
- EP-A- 0 785 703

## Description

### Technical Field

The present invention relates to a device for supplying power to a resonant load, particularly but not exclusively a load circuit comprising a discharge lamp.

More particularly, the invention relates to a device of the type comprising a first switch and a second switch in a half-bridge configuration, with two connections to a substantially direct current power supply; a resonant load circuit with an inductance and a capacitor, together with driving means for the two switches for making said switches alternately conducting and non-conducting at a switching frequency and thus for supplying the resonant load with a voltage at high frequency, typically of the order of tens of kHz.

### Background Art

Devices of this type are described, for example, in US-A-5,801,491, US-A-4,647,817, US-A-5,485,060, US-A-5,479,334, US-A-5,332,951, US-A-349,270 and EP-A-0,785,703. Conventional devices have particularly complex, bulky and expensive circuits for controlling the switching of the two half-bridge switches. In particular, EP-B-0,785,703 discloses two separate circuits for controlling the switching of the two power transistors which form the half-bridge switches. A first circuit, comprising a power supply and a capacitor, determines - by means of the charge of the capacitor - the conducting period of one of the power transistors. A second circuit, separate from the first, is used to bring the other of the two power transistors into the conducting state, for a conduction period equal to the conduction time of the first transistor. The second circuit has a power supply and a comparator. This arrangement is complex and expensive.

EP-A-758160 discloses a power supply circuit including a comparator which keeps a controlled switch off until the voltage of a central point of a half-bridge arrangement of switches has lowered.

### Objects and Summary of the Invention

The object of the present invention is to provide a device of the aforementioned type which is less expensive, less bulky and less complex. In particular, the object of the present invention is to reduce the magnetic components and the number of integrated components and semiconductor components, in particular those operating at high voltage, which are more expensive than low-voltage components.

These and other objects and advantages, which will be evident from the following text to those skilled in the art, are substantially achieved with a device according to claim 1.

In practice, the charge accumulator may be a capacitor or a combination of capacitors. The charging and discharging of the accumulator take place, in a practical embodiment, through at least one resistive element which may be connected between the accumulator and the positive pole or earth.

This arrangement makes it unnecessary to use expensive and bulky magnetic elements for controlling the switching of the two switches in half-bridge configuration. Moreover, while one of the two switches is controlled by a driver circuit, the second switch is controlled by means of a circuit containing a simple charge accumulator and a comparator. In the simplest configuration, this is reduced to a capacitor, one or more resistive elements and a transistor. The conduction time of the second switch may easily be modified simply by varying the value applied to the second input of the comparator, for example a reference current or voltage.

In practice, the resonant load has a resonant frequency lower than the switching frequency of the two switches. The inductive characteristic of the resonant load is such that, whenever the first switch is opened, the voltage at the centre of the half bridge goes to zero, thus causing the second switch to be turned on, in the way which will be described below, as a result of the voltage accumulated between the plates of the capacitor during the period in which the first switch is turned on.

In a possible embodiment, the switches may be two semiconductor switches, made, for example, by MOS (MOSFET) or IGBT technology. Two diodes, which may consist of the parasitic diodes of the transistors themselves, are connected, in a known way, in parallel with the two switches.

Further advantageous characteristics of the device according to the invention are indicated in the attached dependent claims.

In particular, the capacitor forming the charge accumulator may be connected to one of the connections to the power supply through a resistive element, through which the capacitor is charged during the conducting period of the first switch. Preferably, the capacitor is connected - through said resistance - to the connection which is at earth potential, but there is no reason why the capacitor should not be connected to the opposite connection.

In a particularly advantageous embodiment of the device, the comparator circuit comprises a transistor to whose base is applied a voltage which is variable as a function of the voltage between the plates of the charge accumulator, and whose collector is connected to said second switch, to open and close it. Thus the voltage between the plates of the capacitor is used to carry out the switching of the second switch.

### Brief Description of the Drawings

The invention will be more clearly understood from the description and the attached drawing which shows non-restrictive examples of the application of the invention. More particularly:
Fig. 1 shows a circuit diagram of a device according to the invention in a first embodiment;
Fig. 2 shows a circuit diagram of a device according to the invention in a second embodiment;
Fig. 3 shows a circuit diagram similar to that of Fig. 1, with a possible embodiment of the comparator;
Fig. 4 shows a diagram of the driving signal of the first switch and the voltage between the plates of the capacitor;
Fig. 5 shows a diagram of the voltage at the input of the comparator; and
Fig. 6 shows a diagram of the base voltage of the transistor of the comparator circuit and of the driving signal of the second switch.

### Detailed Description of the Preferred Embodiment

In the following text, only the parts of the device which are essential to the understanding of the present invention are described, while the description of parts and components commonly used in inverters of this type, but whose function is not relevant for the purposes of the invention, is omitted. Moreover, the device is described in combination with the typical situation in which the charging circuit comprises a discharge lamp, although the invention is not limited to this type of application, but may be used in applications in which similar problems are encountered.

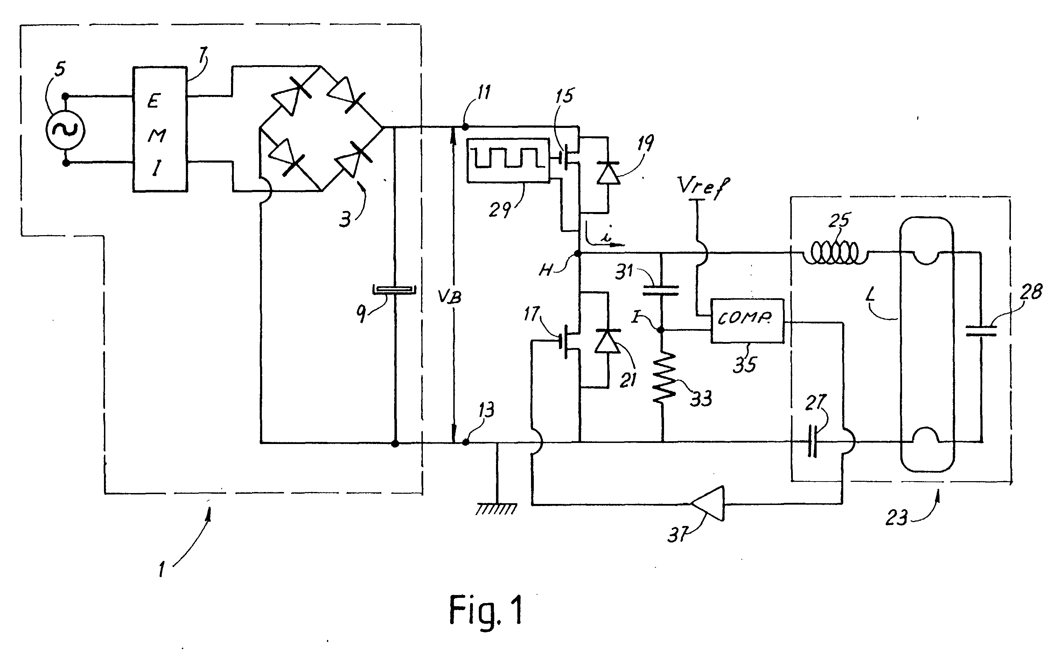

With reference initially to Fig. 1, the device according to the invention has a substantially direct current power supply, indicated overall by 1. In the illustrated example, the power supply comprises a rectifier bridge 3 connected to an alternating current power supply line 5 with the interposition of an EMI filter 7. A smoothing capacitor 9 is connected to the output of the rectifier bridge.

The supply 1 is connected through two connections 11 and 13 to a pair of switches in half-bridge configuration, consisting, in the illustrated example, of two power MOSFETs 15 and 17, each of which has a corresponding diode 19, 21 in parallel with it. A resonant load, indicated in a general way by 23 and comprising an inductance 25, a discharge lamp L and a capacitor 27, is connected to the half bridge 15, 17, 19, 21 (between the center H of the half bridge and earth). A starter capacitor, indicated by 28, is connected in parallel with the lamp L.

The first switch 15 is associated with a driver circuit indicated schematically and generically by 29, which generates a square-wave driving signal at a switching frequency fₒ which is greater than the resonant frequency fᵣ of the charging circuit 23. For example, the switching frequency fₒ may be 50 kHz, while the resonant frequency fᵣ of the charging circuit may be 30 kHz. The square-wave signal is applied to the base of the switch 15, which becomes conducting when the driving signal 29 is high and non-conducting when said driving signal is low.

A branch comprising a capacitor 31 and a resistor 33 is connected in parallel with the second switch 17. The capacitor 31 forms a charge accumulator, while the resistor 33 forms a means of charging and discharging the capacitor as a function of the voltage at the center H of the half bridge.

The first plate of the capacitor 31 is at the potential of the center H of the half bridge, while the potential of the second plate (connected to earth through the resistor 33) forms a first input of a comparator 35, to whose second input a reference voltage V_{ref} is applied. The output signal of the comparator is used - suitably amplified by an amplifier indicated schematically by 37 - to drive the switching of the MOSFET 17. As will be indicated below with reference to a different embodiment, the input of the comparator 35 may also be in an intermediate position between two resistive elements which act in combination as the resistor indicated in a general way by 33 in Fig. 1.

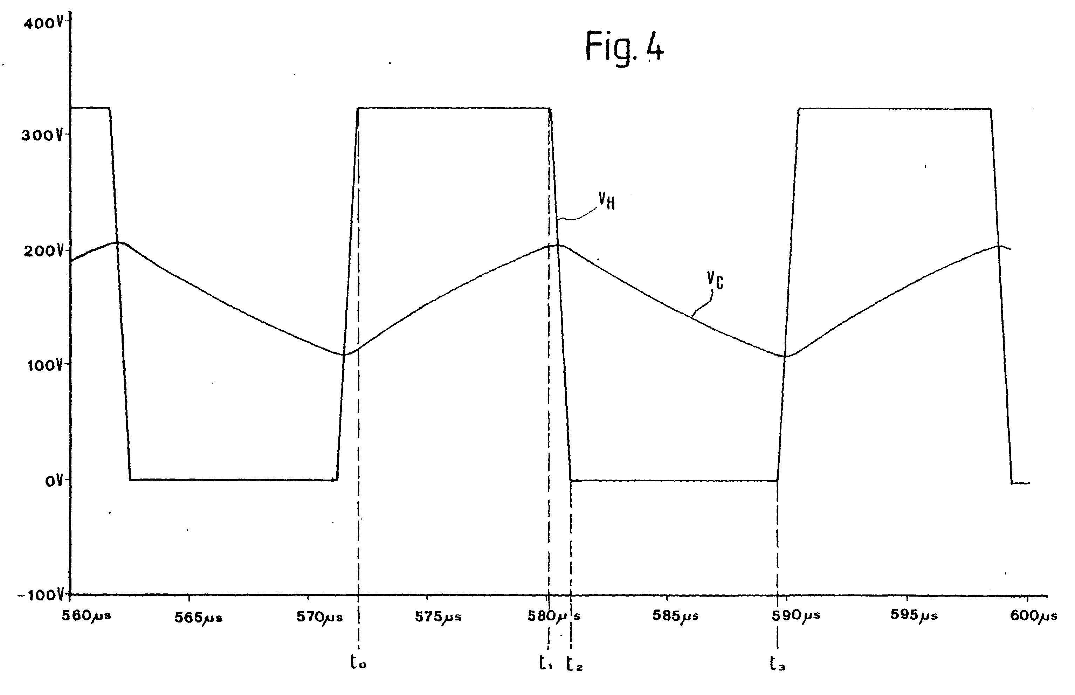

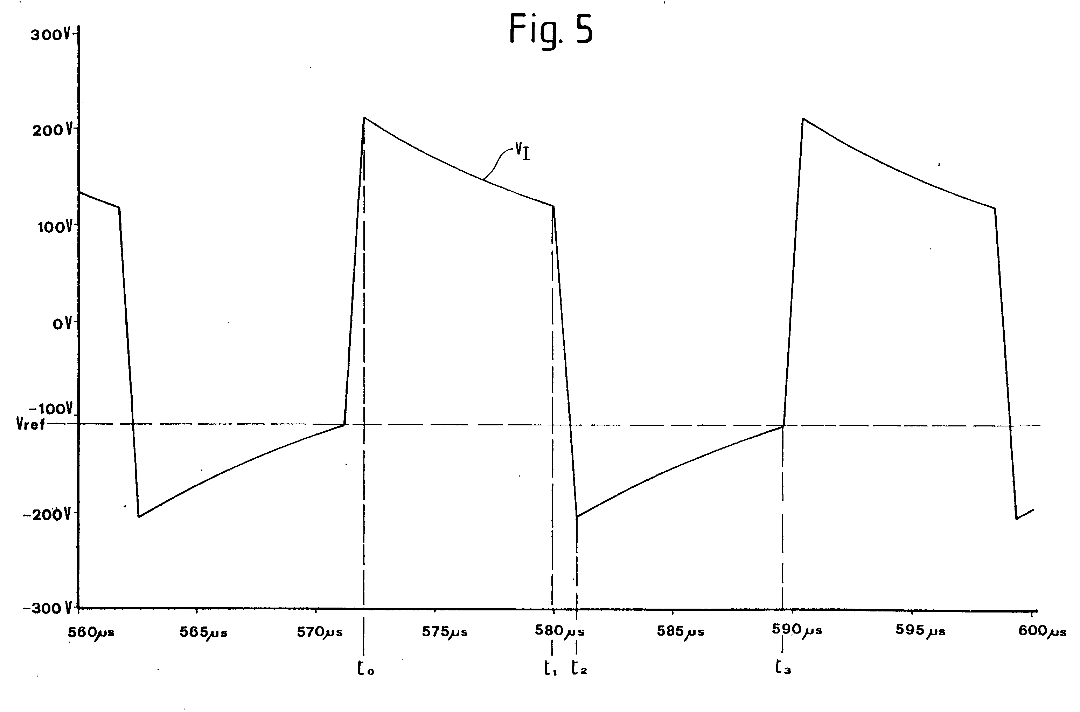

The operation of the device described in summary above is explained below with reference to the diagrams in Figs. 4 and 5. When the switch 15 is conducting, a current i flows through the charging circuit 25, L, 27 (see Fig. 1). In this phase, the capacitor 31 is charged through the resistor R and the potential difference Vc between the plates of the capacitor 31 rises exponentially. Fig. 4 shows the variation in the voltage Vc as a function of time. The conducting period of the switch 15 corresponds to the interval between the instants t₀ and t₁.

The voltage V_{I} at the point I, in other words at the input of the comparator 35, decreases with time as shown in Fig. 5, but is always positive and greater than the value of the reference voltage V_{ref} applied to the other input of the comparator 35. In these conditions, the output signal of the comparator 35 is at the low value and keeps the switch 17 non-conducting. The voltage V_{H} (see Fig. 4) at the center of the half bridge is constantly at a high value, being approximately 320 V in the example illustrated.

When the driver circuit 29 opens the switch 15, the voltage V_{H} at the center of the half bridge decreases to the value of zero (instant t₂ in Fig. 4), since the diode 21 becomes conducting. Consequently, the voltage V_{I} at the first input of the comparator 35 changes sign, becoming negative, and at the instant t₂ takes on a value lower than the value of the reference voltage V_{ref}. This causes the output of the comparator 35 to switch from the low value to the high value, and this switching, through the amplifier 37, causes the switch 17 to become conducting.

In this condition (switch 15 non-conducting and switch 17 conducting) the capacitor 31 is discharged through the resistor 33 and consequently the voltage V_{I} increases gradually from the instant t₂ to the instant t₃ at a rate which depends on the time constant RC of the branch consisting of the capacitor 31 having the value C and the resistor 33 having the value R. At the instant t₃, the voltage V_{I} reaches the value of the reference voltage V_{ref}, and this causes the output signal of the comparator 35 to be switched again from the high value to the low value and consequently causes the switch 17 to become non-conducting. The time interval t₃-t₂ can be set to the desired value by adjusting the value of the reference voltage V_{ref}.

At the instant at which the switch 17 is made non-conducting, the driver circuit 29 causes the switch 15 to become conducting, the rising side of the square-wave driving signal being synchronized with the signal of the comparator 35 for the reasons indicated below. At this point a new operating cycle begins.

The synchronization between the instant of the opening of the switch 17 and the instant of the closing of the switch 15 is achieved in the following way.

The capacitor 31 is charged during the conducting period of the switch 15. The charge accumulated in the capacitor 31 is proportional both to the supply voltage between the connections 11 and 13 (which is assumed to be substantially constant) and to the conducting time of the switch 15 as a result of the time constant RC. When the switch 15 is non-conducting and the switch 17 is conducting, the capacitor 31 is discharged with a time constant RC equal to the charging time constant. As the capacitor 31 loses its charge, the voltage V_{I} increases (as shown in Fig. 5 between the instants t₂ and t₃). An increase in the charge accumulated in the capacitor 31 during the conducting period of the switch 15, is accompanied by an increase in the time required for the voltage V_{I} to reach the value of the reference voltage V_{ref}. Since the charge accumulated in the capacitor 31 is proportional to the conducting time of the switch 15, the conducting time of the switch 17 will also be proportional to the conducting time of the switch 15. This enables the switching of the two switches 15 and 17 to be synchronized.

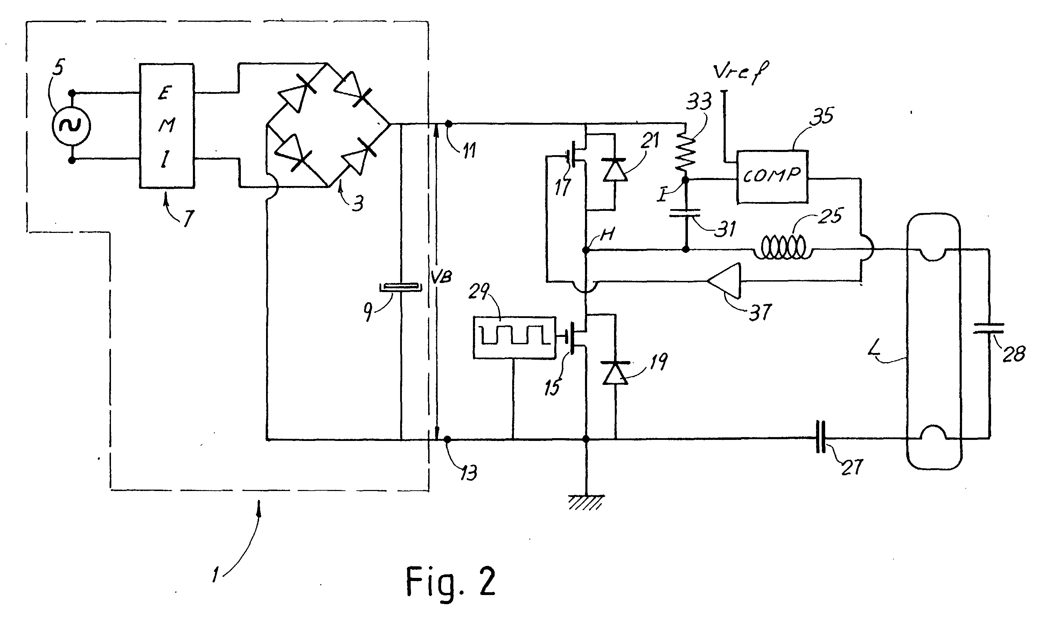

Fig. 2 shows a second example of an embodiment of the device according to the invention, in which the same numbers correspond to parts identical or equivalent to those of the circuit in Fig. 1. In this case, the first switch 15 is connected between the center H of the half bridge and earth, while the second switch 17 is connected between the center H of the half bridge and the positive pole of the substantially direct current power supply 1. Operation is equivalent to that described with reference to Fig. 1, with the difference that when the switch 15 is non-conducting the center H of the half bridge is short-circuited through the diode 21 and is then brought to the voltage V_{B} at which the connection 11 is kept, rather than to zero.

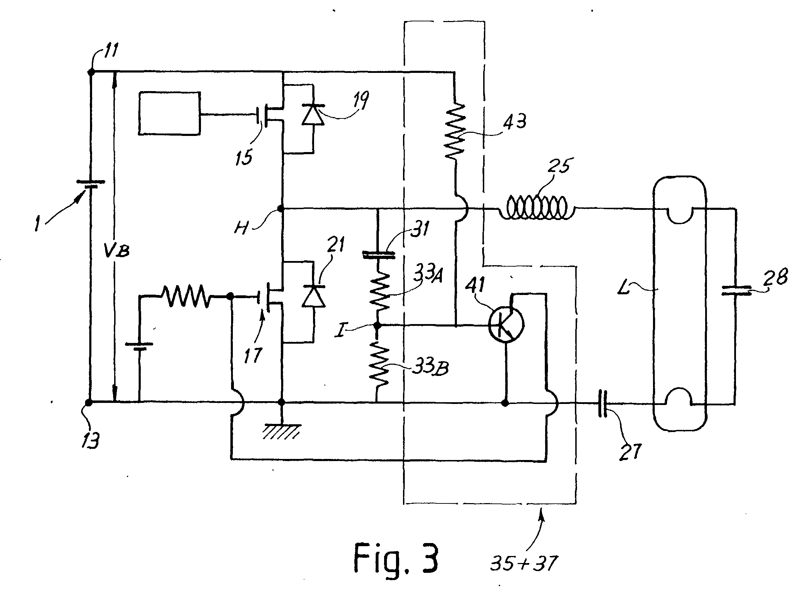

Fig. 3 shows schematically a circuit design which is particularly advantageous for making the comparator 35 and the amplifier 37. In this diagram, the constant power supply 1 is symbolically represented by a battery, while the remaining elements of the circuit are indicated by the same reference numbers as those used in Fig. 1. The comparator-amplifier circuit 35-37 comprises a transistor 41 whose base is connected to the connection 11 through a resistor 43 and to the point I, and whose collector is connected to the gate of the switch 17. In this embodiment, the connection I is at an intermediate point between two resistors 33A, 33B which in combination have the function of the resistor 3 in Fig. 1.

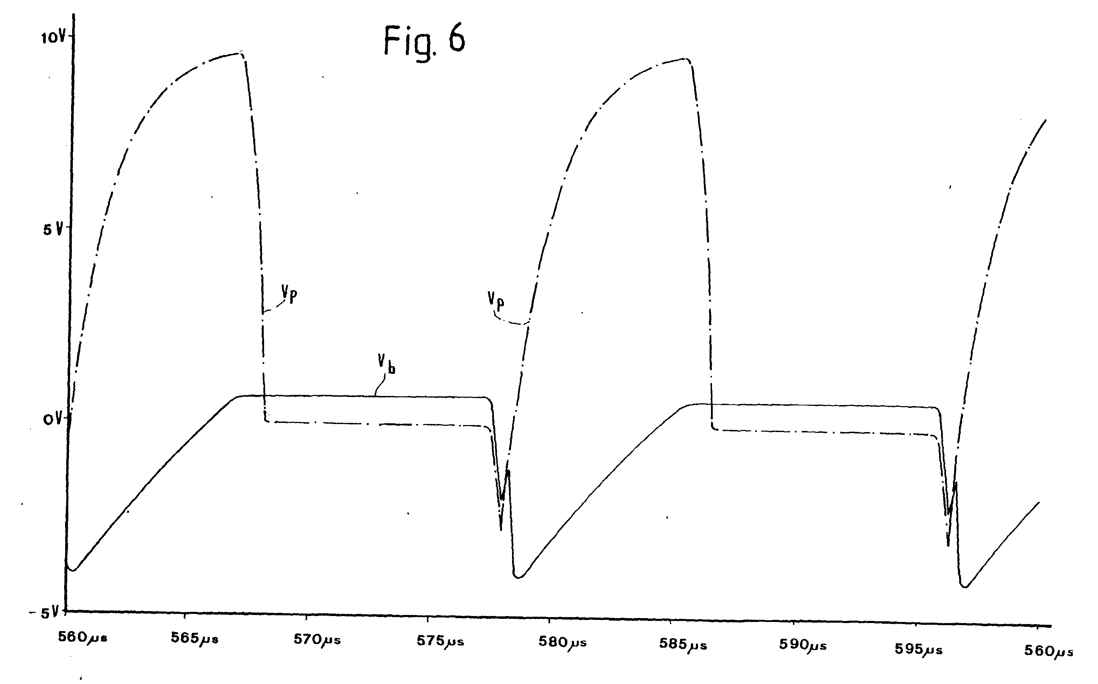

The voltage V_{b} at the base of the transistor 41 varies as shown in Fig. 6. As a result of the change to the conditions in which the switch 15 is non-conducting, at the instant t₂ the base voltage V_{b} of the transistor 41 takes a value such that the transistor 41 is made to conduct, so that the voltage at the collector of this transistor, which is used as the driver signal Vₚ of the switch 17, causes this switch to conduct. The value of the signal Vₚ remains above the threshold of conduction of the switch 15 until the instant t₃.

It should be understood that the drawing shows only an example provided solely as a practical demonstration of the invention, and that this invention may be varied in its forms and arrangements without thereby departing from the scope as defined by the appended claims. The presence of any reference numbers in the following claims has the purpose of facilitating the reading of these claims with reference to the description and to the drawings, and does not limit their scope of protection.

## Claims

1. A device for supplying power to a resonant load (25, L, 27), comprising;
- a first switch (15; 17) and a second switch (17; 15) in a half-bridge configuration, with two connections (11, 13) to a substantially direct current power supply (1);
- a resonant load circuit with at least one inductance (25) and one capacitor (27), connected to a central point of said half-bridge and to one of said two connections ( 11; 13);
- driving means for said first and said second switch (15, 17) for making said switches alternately conducting and non-conducting,
**characterized in that**
a) the first (15; 17) of said switches is connected to a first one of said connections (11; 13) and is associated with a driver circuit which causes said first switch (15) to open and close alternately with a switching frequency (fₒ),
b) a charge accumulator (31) is provided between the central point (H) of said half bridge and the second one of said two connections (11, 13), and is associated with means (33) which cause said charge accumulator to be charged and discharged alternately as a function of the voltage (V_{H}) of the central point (H) of the half bridge, said charge accumulator being charged during the conducting phase of the first switch (15; 17) and discharged during the non-conducting phase of said first switch (15; 17);
c) the charge accumulator (31) is associated with a comparator (35, 37) having a first input connected to said charge accumulator (31) and a second input to which a reference value (V_{ref}) is applied, said comparator causing said second switch to conduct when said first switch is turned off, and keeping said second switch conducting for a period determined by the charging conditions and by the time constant of said charge accumulator (31).

2. Device according to Claim 1, **characterized in that** said charge accumulator is a capacitor (31).

3. Device according to Claim 1 or 2, **characterized in that** said means which alternately cause the charging and discharging of the charge accumulator comprise a resistive element (33) through which said charge accumulator (31) is charged during the conducting period of the first switch (15) and discharged during the non-conducting period of the first switch (15).

4. Device according to one or more of the preceding claims, **characterized in that** said resonant load circuit (25, L, 27) has a resonant frequency (fᵣ) lower than the switching frequency (fₒ) of the two switches (15, 17).

5. Device according to one or more of the preceding claims, **characterized in that** said charge accumulator (31) is connected between the central point (H) of the half bridge and the earth, and **in that** said first switch (15) is connected between the central point (H) of the half bridge and the positive connection (11) to the power supply (1).

6. Device according to one or more of the preceding claims, **characterized in that** said comparator circuit comprises a transistor (41) to whose base is applied a voltage which is variable as a function of the charging current of said charge accumulator (31), and whose collector is connected to said second switch (17; 15), to open and close it.

7. Device according to one or more of the preceding claims, **characterized in that** said load circuit comprises a discharge lamp in series with said at least one inductance (25) and said at least one capacitor (27).

## Patentansprüche

1. Vorrichtung zur Stromzufuhr zu einer Resonanzlast (25, L, 27), mit
- einem ersten Schalter (15, 17) und einem zweiten Schalter (17, 15) in einer Halbbrückenanordnung, mit zwei Anschlüssen (11, 12) zu einer Stromquelle (1) für im wesentlichen Gleichstrom;
- einer Resonanz-Lastschaltung mit mindestens einer Induktanz (25) und einem Kondensator (27), die mit einem Mittelabgriff der Halbbrücke und mit einem der beiden Anschlüsse (11, 13) verbunden sind;
- Treibermitteln für den ersten und zweiten Schalter (15, 17), um die Schalter abwechselnd leitend und nicht leitend zu machen,
**dadurch gekennzeichnet, daß**
a) der erste (15, 17) der beiden Schalter mit einem ersten der Anschlüsse (11, 13) verbunden ist und einer Treiberschaltung zugeordnet ist, die das abwechselnde Öffnen und Schließen des ersten Schalters (15) mit einer Schaltfrequenz (f₀) steuert;
b) ein Ladungsspeicher (31) zwischen dem Mittelabgriff (H) der Halbbrücke und dem zweiten der beiden Anschlüsse (11, 13) vorgesehen ist und zugeordnete Mittel (33) hat, die das abwechselnde Laden und Entladen des Ladungsspeichers als Funktion der Spannung (V_{H}) am Mittelabgriff (H) der Halbbrücke steuern, wobei der Ladungsspeicher während der leitenden Phase des ersten Schalters (15, 17) geladen und während der nichtleitenden Phase des ersten Schalters (15, 17) entladen wird;
c) dem Ladungsspeicher (31) ist ein Vergleicher (35, 37) zugeordnet mit einem ersten Eingang, der mit dem Ladungsspeicher (31) verbunden ist, und einem zweiten Eingang, an dem ein Referenzwert (V_{ref}) anliegt, wobei der Vergleicher den zweiten Schalter leitend macht, wenn der erste Schalter abgeschaltet ist, und den zweiten Schalter leitend hält während eines Zeitraums, der von dem Ladungszustand und der Zeitkonstanten des Ladungsspeichers (31) abhängt.

2. Vorrichtung nach Anspruch 1,
**dadurch gekennzeichnet, daß** der Ladungsspeicher ein Kondensator (31) ist.

3. Vorrichtung nach Anspruch 1 oder 2,
**dadurch gekennzeichnet, daß** die Mittel, die das abwechselnde Laden und Entladen des Ladungsspeichers bewirken, ein Widerstandselement (33) umfassen, durch welches der Ladungsspeicher (31) während der leitenden Phase des ersten Schalters (15) geladen und während der nichtleitenden Phase des ersten Schalters (15) entladen wird.

4. Vorrichtung nach einem oder mehreren der vorangehenden Ansprüche,
**dadurch gekennzeichnet, daß** der Resonanzlastkreis (25, L, 27) eine Resonanzfrequenz (fᵣ) hat, die niedriger ist als die Schaltfrequenz (fₒ) der beiden Schalter (15, 17).

5. Vorrichtung nach einem oder mehreren der vorangehenden Ansprüche,
**dadurch gekennzeichnet, daß** der Ladungsspeicher (31) zwischen den Mittelabgriff (H) der Halbbrücke und Erde geschaltet ist und daß der erste Schalter (15) zwischen den Mittelabgriff der Halbbrücke und einen positiven Anschluß (11) der Stromversorgung (1) geschaltet ist.

6. Vorrichtung nach einem oder mehreren der vorangehenden Ansprüche,
**dadurch gekennzeichnet, daß** die Vergleichsschaltung einen Transistor (41) aufweist, an dessen Basis eine Spannung anliegt, die in Abhängigkeit vom Ladestrom des Ladungsspeichers (31) variabel ist, und dessen Kollektor mit dem zweiten Schalter (15, 17) verbunden ist, um diesen zu öffnen und zu schließen.

7. Vorrichtung nach einem oder mehreren der vorangehenden Ansprüche,
**dadurch gekennzeichnet, daß** die Lastschaltung eine Entladungslampe in Serie mit mindestens einer Induktanz (25) und dem mindestens einen Kondensator (27) enthält.

## Revendications

1. Dispositif pour fournir l'alimentation à une charge résonnante (25, L, 27), comprenant :
un premier commutateur (15, 17) et un second commutateur (15 ; 17) dans une configuration de demi-pont, avec deux bornes (11, 13) à une alimentation de courant substantiellement continu (1) ;
un circuit résonnant de charge avec au moins une inductance (25) et un condensateur (27), raccordé à un point milieu dudit demi-pont et une desdites deux bornes (11 ; 13) ;
un moyen de commande pour ledit premier et ledit second commutateur (15, 17) pour rendre lesdits commutateurs alternativement conducteurs et non-conducteurs,
**caractérisé en ce que**
a) le premier (15 ; 17) desdits commutateurs est raccordé à une première desdites bornes (11 ; 13) et est associé à un circuit de commande qui provoque l'ouverture et la fermeture alternativement dudit premier commutateur (15) avec une fréquence de commutation f₀,
b) un accumulateur de charge (31) est placé entre le point milieu H dudit demi-pont et une seconde desdites deux bornes (11, 13), et est associé au moyen (33) qui provoque la charge et la décharge dudit accumulateur de charge alternativement en fonction de la tension (V_{H}) du point milieu (H) du demi-pont, ledit accumulateur de charge étant chargé pendant la phase de conduction du premier commutateur (15 ; 17) et déchargée pendant la phase de non-conduction dudit premier commutateur (15 ; 17) ;
l'accumulateur de charge (31) est associé à un comparateur (35, 37) ayant une première entrée raccordée audit accumulateur de charge (31) et une seconde entrée à laquelle une valeur de référence (V_{ref}) est appliquée, ledit comparateur provoquant la conduction dudit second commutateur lorsque ledit premier commutateur est bloqué, et maintenant ledit second commutateur conducteur pendant une période déterminée par les conditions de charge et par la constante de temps dudit accumulateur de charge (31).

2. Dispositif selon la revendication 1,
**caractérisé en ce que** ledit accumulateur de charge est un condensateur (31).

3. Dispositif selon la revendication 1 ou 2,
**caractérisé en ce que** ledit moyen qui provoque alternativement la charge et la décharge de l'accumulateur de charge comprend un élément résistif (33) à travers lequel ledit accumulateur de charge (31) est chargé pendant la période de conduction du premier commutateur (15) et déchargé pendant la période de non-conduction du premier commutateur (15).

4. Dispositif selon une ou plusieurs des revendications précédentes, **caractérisé en ce que** ledit circuit de charge résonante (25, L, 27) possède une fréquence de résonance (fᵣ) inférieure à la fréquence de commutation (f₀) des deux commutateurs (15, 17).

5. Dispositif selon une ou plusieurs des revendications précédentes, **caractérisé en ce que** ledit accumulateur de charge (31) est raccordé entre le point milieu (H) du demi-pont et la masse, lorsque le premier commutateur 15 est raccordé entre le point milieu (H) du demi-pont et le raccordement positif (11) à l'alimentation (1).

6. Dispositif selon une ou plusieurs des revendications précédentes, **caractérisé en ce que** ledit circuit comparateur comprend un transistor (41) dont la base reçoit une tension qui est variable en fonction du courant de charge dudit accumulateur de charge (31), et dont le collecteur est raccordé audit second commutateur (17 ; 15), pour l'ouvrir et le fermer.

7. Dispositif selon une ou plusieurs des revendications précédentes, **caractérisé en ce que** ledit circuit de charge comprend une lampe de décharge en série avec ladite au moins une inductance (25) et ledit au moins un condensateur (27).
